# EUROPÄISCHE PATENTSCHRIFT

(11) **EP 1 980 356 B1**
(45) Veröffentlichungstag und Bekanntmachung des Hinweises auf die Patenterteilung: **05.10.2016**
(21) Anmeldenummer: 08007091.5
(22) Anmeldetag: 10.04.2008
(51) Int. Cl.: B23B 31/16

(54) **Vorrichtung zur Aufnahme eines im wesentlichen zylindrischen Werkstückes, insbesondere eines Schmuckringes, für die Bearbeitung mit einem Laserstrahl**
Device for fitting a fundamentally cylindrical workpiece, in particular a decorative ring, for processing with a laser beam
Dispositif de réception d'une pièce à usiner essentiellement cylindrique, en particulier d'une bague, pour le traitement avec un rayon laser

(30) Priorität: 10.04.2007 DE 102007017073
(43) Veröffentlichungstag der Anmeldung: 15.10.2008
(73) Patentinhaber: ROFIN-BAASEL Lasertech GmbH & Co. KG, 82319 Starnberg (DE)
(72) Erfinder: Friedmann, Günther, 83236 Übersee (DE); Bauer, Wolfgang, 82110 Germering (DE)
(74) Vertreter: Meissner Bolte Partnerschaft mbB

(56) Entgegenhaltungen:
- DE-A1- 10 100 148
- JP-A- 61 038 791
- JP-A- 61 038 792
- JP-A- 2004 338 024
- US-A- 3 617 046
- US-A- 4 255 077
- US-A- 4 821 393

## Beschreibung

Die Erfindung bezieht sich auf eine Vorrichtung zur Aufnahme eines im wesentlichen zylindrischen Werkstückes, insbesondere eines Schmuckringes, für die Bearbeitung mit einem Laserstrahl.

Bei der Laserbearbeitung eines zylindrischen Werkstückes, insbesondere eines Schmuckringes, ist es im Stand der Technik üblich, eine an den jeweiligen konkreten Anwendungsfall angepasste Vorrichtung in das Lasergerät einzubauen und dort zu justieren. Je nach Anwendungsfall, beispielsweise Innengravur oder Außengravur eines Schmuckrings oder anderen ähnlich geformten Werkstücken, muss dann die gesamte Vorrichtung ausgetauscht oder neu eingerichtet werden. Die jeweilige Umrüstung erfordert einen hohen Zeitaufwand, der die eigentliche Bearbeitungszeit, d.h. die Zeit, in der das Werkstück bzw. der Schmuckring mit dem Laserstrahl bearbeitet wird, erheblich übersteigt. Darüber hinaus erfolgt bei den bekannten Vorrichtungen die Aufnahme mit Hilfe von mechanischen Spannvorrichtungen, die für die Aufnahme von hohen Bearbeitungskräften ausgelegt sind und deshalb bei unsachgemäßer oder unvorsichtiger Betätigung Kräfte auf empfindliche Werkstücke ausüben können, die zu deren Verformung führen können.

Aus der JP 2004338024 A ist eine Vorrichtung zur Bearbeitung eines ringförmigen Werkstückes bekannt, bei der dieses auf einem Spannfutter fixiert wird, das drei radial zustellbare Spannstifte umfasst. Bei der aus der US 3,617 046 A bekannten Spannvorrichtung sind eine Mehrzahl von federnd gelagerten, radial zustellbaren Kolben auf einer Platte angeordnet, mit denen ein Werkstück, im vorliegenden Fall ein Brillengestell, durch die Wirkung der von den Federn auf die Kolben ausgeübten Druckkraft selbsttätig fixiert wird. Auch bei der in der US 4,255,077 A offenbarten Spannvorrichtung erfolgt die Fixierung des Werkstückes, im vorliegenden Fall eine Leiterplatte, selbsttätig mit Hilfe von federbetätigten Spannkolben. Aus der US 4,821,393 A ist eine Spannvorrichtung für eine elektronische Komponente bekannt, die motorisch angetriebene Spannbacken umfasst, die an das Werkstück anlegbare Druckplatten umfassen, die federnd an den Spannbacken gelagert sind, um eine Beschädigung des Werkstückes zu vermeiden.

Aus der DE10100148 ist ein Spannfutter für Werkzeugmaschinen bekannt, bei dem die spannende Federkraft durch den Benutzer durch Einstellschrauben veränderbar ist. D.h. aus der DE10100148 ist eine Vorrichtung bekannt zur Aufnahme eines im wesentlichen zylindrischen Werkstückes, mit zumindest einem drehbar um eine Drehachse gelagerten ersten Spannfutter zur zentrischen Aufnahme des Werkstückes mit, radial zu einer mit der Drehachse zusammenfallenden Spannachse verstellbaren ersten Spannelementen, die das Werkstück selbsttätig unter Ausübung einer Federkraft fixieren.

Der Erfindung liegt nun die Aufgabe zu Grunde, eine Vorrichtung zur Aufnahme eines im wesentlichen zylindrischen Werkstückes, insbesondere eines Schmuckringes, für die Bearbeitung mit einem Laserstrahl anzugeben, mit der eine unbeabsichtigte Beschädigung eines empfindlichen Werkstückes weitgehend vermieden ist.

Die genannte Aufgabe wird gemäß der Erfindung gelöst mit den Merkmalen des Anspruches 1. Da zur Aufnahme des Werkstückes in einem ersten Spannfutter angeordnete erste Spannelemente vorgesehen sind, die das Werkstück selbsttätig unter Ausübung einer Federkraft fixieren, ist eine unbeabsichtigte, zu hohe Krafteinwirkung auf das Werkstück, wie sie beispielsweise bei manuell mit Hebeln oder Schrauben verstellbaren Spanneinrichtungen auftreten können, vermieden.

Die Erfindung geht dabei von der Überlegung aus, dass die Bearbeitung eines Werkstückes mit einem Laserstrahl praktisch kräftefrei erfolgt, so dass es für die Laserbearbeitung ausreicht, das Werkstück mit moderaten Haltekräften in der Bearbeitungsposition zu fixieren. Durch die Verwendung federbelasteter erster Spannelemente, die das Werkstück selbsttätig unter Ausübung einer Federkraft fixieren, ist eine ungewollte zu hohe Kraftausübung beim Einspannen des Werkstückes vermieden. Die Spannelemente müssen hierzu nur unmittelbar oder mittelbar mit Hilfe von mechanischen Stellelementen in eine Position gebracht werden, die es ermöglicht, das Werkstück in die Aufnahmeposition am ersten Spannfutter anzuordnen. Beim Freigeben der Spannelemente stellen sich diese unter der Wirkung der Federkraft von selbst auf das Werkstück zu und fixieren es in der Bearbeitungsposition ohne die Ausübung weiterer externer Kräfte ausschließlich mit einer konstruktiv vorgegebenen und an das Werkstück angepassten Federkraft.

Wenn das erste Spannfutter auswechselbar an einer Welle eines an einem Träger angeordneten Drehantriebs fixierbar ist, ist eine besonders flexible Bearbeitung unterschiedlich geformter Werkstücke möglich, da das erste Spannfutter durch ein anderes, an das konkrete Werkstück angepasstes weiteres Spannfutter ausgetauscht werden kann.

In einer weiteren vorteilhaften Ausgestaltung der Erfindung ist der Drehantrieb um eine senkrecht zur Welle verlaufende Schwenkachse am Träger schwenkbar gelagert. Dadurch wird die Flexibilität bei der Bearbeitung des Werkstückes erhöht.

Wenn außerdem der Drehantrieb unterschiedlichen Rastpositionen am Träger arretierbar ist, die verschiedenen Schwenkpositionen zugeordnet sind, können unterschiedliche Bearbeitungspositionen ohne zusätzlichen Justageaufwand reproduzierbar eingestellt werden.

Wenn das Werkstück entweder am Außen- oder am Innenumfang mit ersten Spannelementen verspannt wird, die als Doppelkegel ausgebildet sind, ist unabhängig davon, ob diese selbsttätig durch die Wirkung einer Federanordnung oder durch manuelles oder motorisches Verstellen an das Werkstück zugestellt werden, sichergestellt, dass sich die senkrecht zur Zylinderachse verlaufende Mittenebene eines rotationssymmetrischen zylindrischen Werkstückes, dessen Stirnflächen bzw. dessen an den Doppelkegeln anliegende Kanten sich ebenfalls in einer senkrecht zur Zylinderachse verlaufenden Ebene befinden, stets in derselben Arbeitsposition innerhalb der Spannvorrichtung befindet. Dadurch ist korrekte Einstellung des Laserstrahls bei der Bearbeitung des Werkstückes vereinfacht.

Weitere vorteilhafte Ausgestaltungen der Erfindung sind in den weiteren Unteransprüchen angegeben.

Zur weiteren Erläuterung der Erfindung wird auf die Ausführungsbeispiele der Zeichnung verwiesen. Es zeigen:
Fig. 1 eine Vorrichtung gemäß der Erfindung in einer perspektivischen Darstellung,
Fig. 2 ein erstes Spannfutter gemäß der Erfindung ebenfalls in einer perspektivischen Darstellung,
Fig. 3 das erste Spannfutter in einer Draufsicht von unten
Fig. 4 ein Prinzipbild, in dem die Wirkungsweise des ersten Spannfutters veranschaulicht ist,
Fig. 5 ebenfalls ein Prinzipbild, das die Lagerung des Werkstücks zwischen den Spannelementen des ersten Spannfutters zeigt,
Fig. 6 und 7 die Vorrichtung gemäß der Erfindung mit in unterschiedlichen Schwenkpositionen angeordnetem Drehantrieb,
Fig. 8 die Vorrichtung gemäß der Erfindung mit einem zweiten, alternativen Spannfutter in Arbeitsposition,
Fig. 9 eine Hilfsvorrichtung zum Einsetzen eines hohlzylindrischen Werkstückes in die zweite Spannvorrichtung in einer perspektivischen Darstellung.

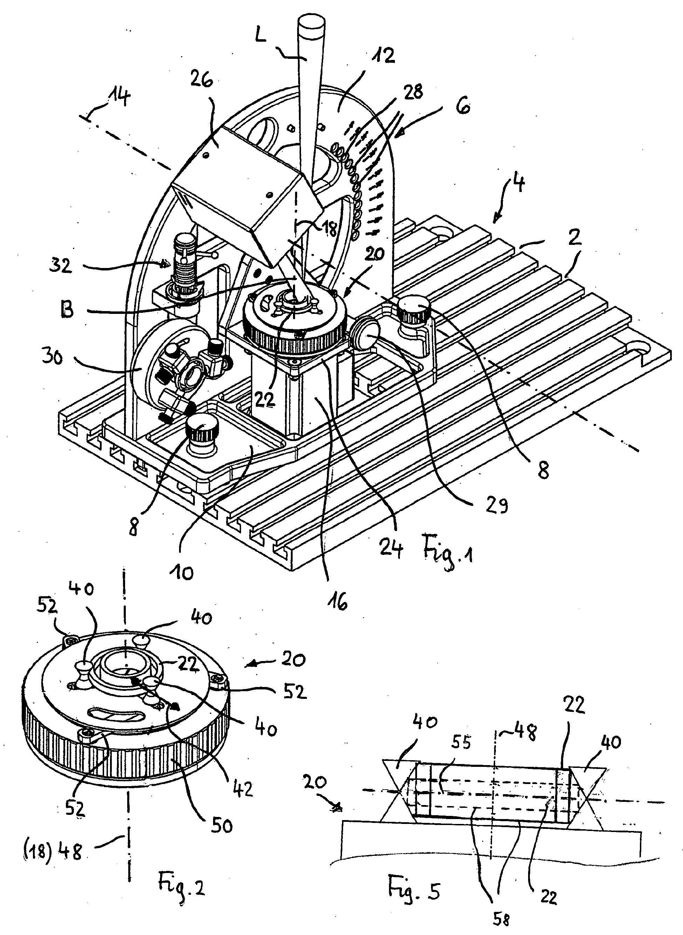

Gemäß Fig. 1 umfasst die Vorrichtung gemäß der Erfindung eine mit mehreren T-förmigen Längsnuten 2 versehene Montageplatte 4, auf der ein Träger 6 mit Hilfe von Klemmschrauben 8 und Positionierstiften ortsfest relativ zu einem von einem in der Figur nicht dargestellten Lasergerät erzeugten fokussierten Laserstrahl L montiert ist. Der Träger 6 umfasst eine auf der Montageplatte 4 aufliegende Grundplatte 10, von der ausgehend sich senkrecht zu dieser eine Halteplatte 12 erstreckt, an der schwenkbar um eine senkrecht zu dieser verlaufende Schwenkachse 14 ein Drehantrieb 16 gelagert ist.

An einer Welle des Drehantriebes 16 ist ein drehbar um die Drehachse 18 der Welle auswechselbar gelagertes erstes Spannfutter 20 fixiert, in das ein im wesentlichen zylindrisches Werkstück 22, im Beispiel ein hohlzylindrisches Werkstück, beispielsweise ein Schmuckring, zentrisch eingespannt ist.

Der Drehantrieb 16 ist in einer schwenkbar um die Schwenkachse 14 am Träger 6 gelagerten Halterung 24 fixiert, so dass das Werkstück 22 in unterschiedliche Bearbeitungspositionen relativ zum Laserstrahl L geschwenkt werden kann.

An der bogenförmig gestalteten Halteplatte 12 ist eine Beobachtungskamera 26 angeordnet, deren Bildfeld, in der Figur durch einen Beobachtungskegel B angedeutet, die Bearbeitungszone, d.h. den Fokus des Laserstrahls L umfasst, um auf diese Weise eine Sichtkontrolle der Bearbeitung zu ermöglichen.

An der Halteplatte 12 sind in unterschiedlichen Winkelpositionen Vertiefungen 28 eingebracht, in die ein an der Halterung 24 des Drehantriebes 16 federnd gelagerter und entriegelbarer Bolzen 29 einrastet, so dass der Drehantrieb 16 und damit das an ihm gelagerte erste Spannfutter 20 in unterschiedliche, vorgegebene (indexierte) Schwenk- oder Rastpositionen geschwenkt und in diesen arretiert werden kann, ohne dass es hierzu jeweils einer exakten Justierung bedarf. Entsprechend der zu unterschiedlichen Winkelpositionen gehörenden unterschiedlichen Lage der Bearbeitungsstelle wird der Laserstrahl L mit Hilfe einer in der Figur ebenfalls nicht dargestellten Strahlführungseinrichtung positioniert.

Die Beobachtungskamera 26 kann in unterschiedlichen Positionen an der Halteplatte 12 angeordnet werden, die einerseits die Ausbreitung des Laserstrahls L nicht behindern und andererseits eine optimale Beobachtung des Bearbeitungsvorganges ermöglichen.

In einer an der Halteplatte 12 befindlichen Aufnahme befindet sich ein zweites, konstruktiv vom ersten Spannfutter 20 verschiedenes zweites Spannfutter 30. Je nach zu bearbeitendem Werkstück 22 kann das erste Spannfutter 20 gegen das zweite Spannfutter 30 ausgewechselt werden. In einer ebenfalls an der Halteplatte 12 angebrachten Aufnahme befindet sich außerdem eine Hilfseinrichtung 32, die zum Einsetzen eines hohlzylindrischen Werkstückes in das zweite Spannfutter 30 dient, und dessen Funktionsweise nachstehend näher erläutert wird.

Gemäß Fig. 2 umfasst das erste Spannfutter 20 drei radial zu einer Spannachse 48 verstellbare erste Spannelemente 40, die die Form eines Doppelkegels aufweisen. Die radiale Verstellbarkeit der Spannelemente 40 zur Spannachse 48 ist durch einen Doppelpfeil 42 angedeutet. Hierzu sind die Spannelemente 40 auf Schwenkhebeln 52 zwangsgeführt gelagert. Die Spannachse 48 fällt dann, wenn das Spannfutter 20 am Drehantrieb 16 (Fig. 1) fixiert ist, mit der Drehachse 18 (Fig. 1) zusammen. Eine drehbar um die Spannachse 48 gelagerte Abdeckscheibe 49 dient zum Staubschutz der unter ihr befindlichen Teile des ersten Spannfutters 20.

Das Spannfutter 20 weist einen gerändelten Drehring 50 auf, an dem die Schwenkhebel 52 schwenkbar um eine parallel zur Spannachse 48 verlaufende Schwenkachse gelagert sind. Durch Drehen des Drehrings 50 können die ersten Spannelemente 40 über die Schwenkhebel 52 nach innen oder nach außen verstellt werden. Im Beispiel der Figur ist eine Situation dargestellt, in der die ersten Spannelemente 40 ein ringförmiges Werkstück 22 an seinem Außenumfang mit einer zur Spannachse 48 hin gerichteten Federkraft einspannen. Mit Hilfe des dargestellten ersten Spannfutters 20 ist es jedoch auch möglich, ein hohlzylindrisches Werkstück an seinem Innenumfang, d.h. mit nach außen gerichteter Federkraft zentrisch zur Spannachse 48 zu verspannen.

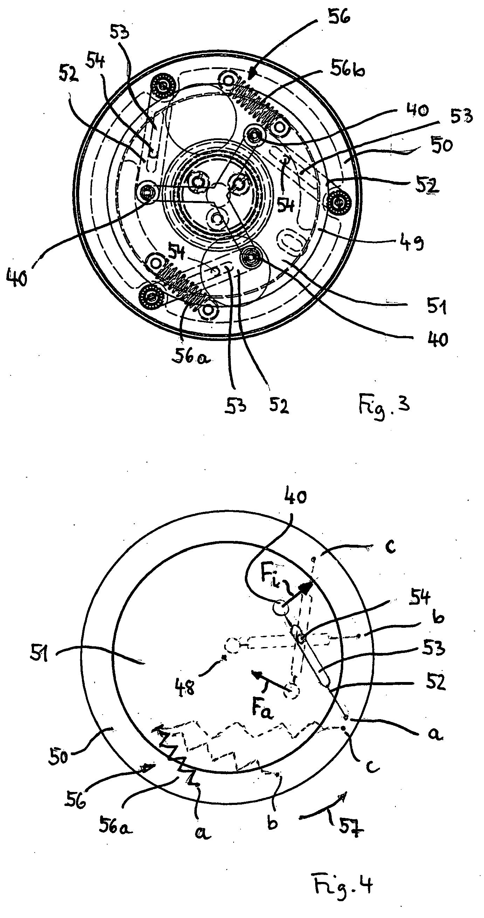

Gemäß Fig. 3, die eine Draufsicht auf die Oberseite, d. h. auf die den ersten Spannelementen 40 zugewandte Seite der ersten Spannvorrichtung 20 zeigt, ist der Drehring 50 drehbar um eine unterhalb der Abdeckscheibe 49 angeordnete starre Scheibe 51 gelagert. Zwischen Drehring 50 und Scheibe 51 wirkt eine Federanordnung 56, die im Ausführungsbeispiel aus zwei Schraubenzugfedern 56a und 56b besteht. Die erste Spannvorrichtung 20 befindet sich in einer Ausgangslage, in der die am freien Ende der Schwenkhebel 52 angeordneten ersten Spannelemente 40 am weitesten von der Mitte entfernt sind. In den Schwenkhebeln 52 ist in Richtung ihrer Längsachse eine Ausnehmung 53 eingebracht, in die ein an der starren Scheibe 51 angeordneter Zapfen 54 eingreift, so dass beim Verdrehen des Drehrings 50 eine Schwenkbewegung der Schwenkhebel 52 erfolgt.

Fig. 4 veranschaulicht den beim ersten Spannfutter 20 wirkenden Spannmechanismus in einer Prinzipdarstellung, in der aus Gründen der Übersichtlichkeit nur eines der drei ersten Spannelemente 40 dargestellt ist. In einer Ausgangsposition a des Schwenkhebels 52 befindet sich das erste Spannelement 40 in einer Position, in der es am weitesten von der Spannachse 48 entfernt ist. Dies wird durch die auf den Drehring 50 wirkende Federanordnung 56 erzeugt, die in der Figur nur schematisch durch eine der Schraubenzugfedern 56a veranschaulicht ist. Diese Federanordnung 56 erzeugt ein auf den Drehring 50 im Uhrzeigersinn wirkendes Drehmoment, d. h eine im Uhrzeigersinn in Umfangsrichtung wirkende Rückstellkraft. Auf diese Weise wird eine nach außen wirkende Kraft Fᵢ auf das erste Spannelement 40 ausgeübt. Wird nun der Drehring 50 gegen die Wirkung der Federanordnung 56 in Richtung des Pfeils 57 entgegen dem Uhrzeigersinn gedreht, so verlagert sich das erste Spannelement 40 aufgrund der durch den in die Ausnehmung 53 des Schwenkhebels 52 eingreifenden feststehenden Zapfens 54 radial zur Mitte hin bis eine Mittenposition b erreicht wird, in der das erste Spannelement 40 am weitesten vom Rand entfernt ist. Bis zu dieser Mittenposition b wirkt auf das erste Spannelement 40 eine durch die Federanordnung 56 verursachte radial nach außen gerichtete Kraft Fᵢ, mit der es möglich ist ein hohlzylindrisches Werkstück an seinem Innenumfang zu fixieren. Ein weiteres Verdrehen der Drehrings 50 in Richtung des Pfeils 57 über die Mittenposition b hinaus bewirkt nun eine Umkehr der auf das erste Spannelement 40 von der Federanordnung 56 über den Drehring 50 ausgeübten Kraft Fₐ, die nunmehr radial nach innen wirkt. Zwischen der Mittenposition b und einer beim Weiterdrehen erreichbaren Endposition c wird dementsprechend beim Loslassen des Drehrings 40 selbsttätig eine nach innen wirkende Kraft Fₐ auf das Werkstück ausgeübt, so dass ein hohl- oder vollzylindrisches Werkstück an seinem Außenumfang eingespannt werden kann. Beim Loslassen des Drehrings 50 bewegt sich dieser, wenn kein Werkstück eingespannt ist, im Uhrzeigersinn in Richtung des Pfeils 58 zurück in die Ausgangsposition a.

Zum Fixieren des Werkstückes muss somit lediglich der Drehring 50 in eine Zwischenposition gedreht werden, in der die ersten Spannelemente 40 entweder innerhalb oder außerhalb des Werkstückes angeordnet sind. Beim Loslassen des Drehrings 50 drücken die ersten Spannelemente je nach Ausgangslage entweder radial nach außen (Positionen zwischen a und b) oder nach innen (Positionen zwischen b und c) und Fixieren das Werkstück selbsttätig entweder am Innenumfang oder am Außenumfang. Diese Fixierung erfolgt allein durch die Wirkung der Federanordnung 56 mit einer durch diese und dem Innen- oder Außendurchmesser des Werkstücks vorgegebenen und vom Bediener nicht beeinflussbaren Haltekraft. Auf diese Weise ist ein durch Fehlbedienung und die Ausübung zu hoher Spannkräfte verursachtes Verformen filigraner Werkstücke vermieden.

Fig. 5 zeigt die Wirkungsweise der in Form eines Doppelkegels ausgebildeten ersten Spannelemente 40 des ersten Spannfutters 20. Durch diese Gestaltung der ersten Spannelemente 40 und die sich daraus ergebende Prismenführung ist sichergestellt, dass die Mittenebene eines zylindrischen Werkstückes 22, die senkrecht zur Zylinderachse orientiert ist, unabhängig von seiner Ausdehnung oder Bauhöhe in Richtung seiner Zylinderachse stets mit einer Arbeitsebene 53 zusammenfällt, die durch den Punkt, an den einander gegenüberliegende Kegel des Doppelkegels zusammenstoßen, vorgegeben ist und somit eine raumfeste Lage relativ zur ersten Spannvorrichtung 20 aufweist. Dies ist in der Figur durch ein Werkstück 22 mit großer Bauhöhe (durchgezogene Linie) und ein Werkstück 22 mit niedriger Bauhöhe (gestrichelte Linie) veranschaulicht. Die Einstellung der Mittenebene des Werkstücks 22 erfolgt dabei beim Einspannen von selbst (selbsttätig). Damit entfällt die Notwendigkeit einer weiteren Justage des Werkstücks.

Durch die symmetrische Gestaltung der Doppelkegel wird außerdem bewirkt, dass ein Werkstück 22, dessen an den Doppelkegeln anliegende Kanten in einer Ebene 58 liegen, die senkrecht zur Zylinderachse orientiert ist, zentrisch zur Spannachse 48 und damit in Arbeitsposition auch zentrisch zur Drehachse 18 positioniert wird.

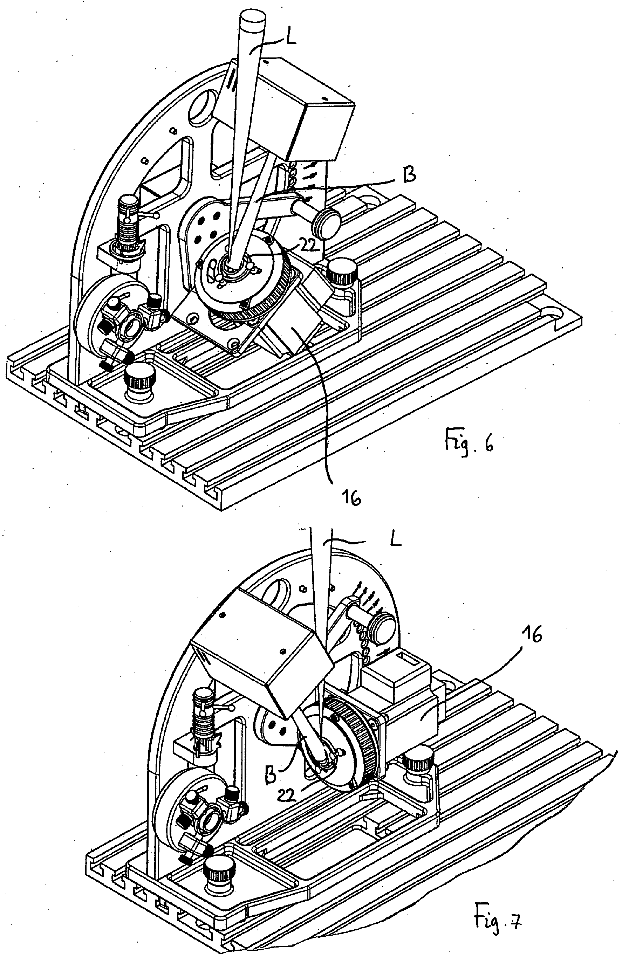

Fig. 6 und 7 zeigen die Vorrichtung gemäß der Erfindung in unterschiedlichen Arbeitspositionen, bei denen sich der Drehantrieb 16 in unterschiedlichen Schwenkpositionen befindet. Fig. 6 zeigt eine Position mit der eine Innenbeschriftung eines ringförmigen Werkstückes 22 möglich ist. Fig. 7 zeigt eine Arbeitsposition, bei der das Werkstück 22 mit seiner Zylinderachse senkrecht zur Strahlachse des Laserstrahls L ausgerichtet ist, so dass es am Außenumfang bearbeitet werden kann.

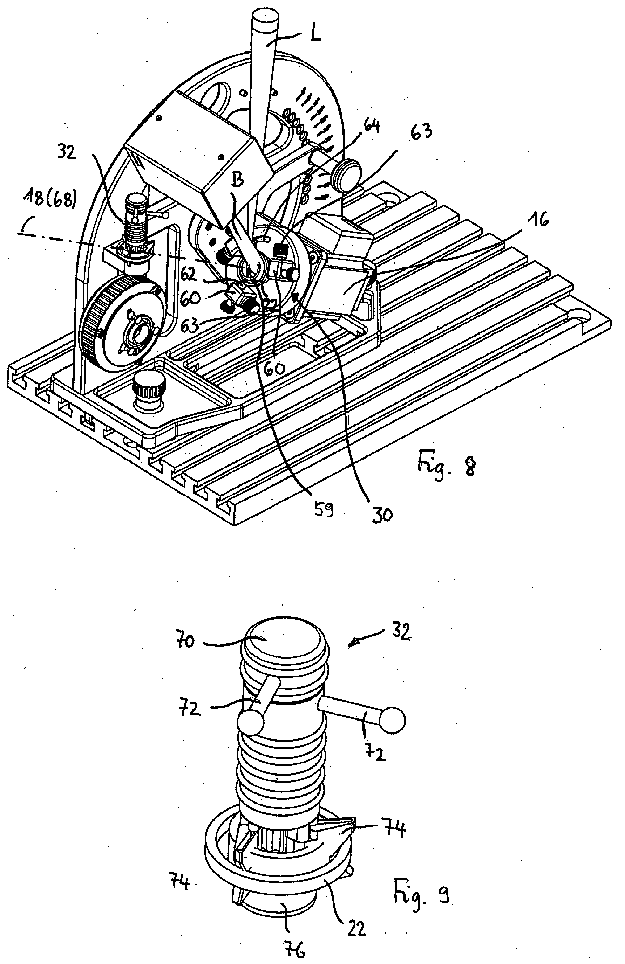

Gemäß Fig. 8 ist anstelle des ersten Spannfutters 20, das sich in dieser Arbeitsposition in der an der Halteplatte 12 befindlichen Aufnahme befindet, das zweite Spannfutter 30 am Drehantrieb 16 fixiert. Das zweite Spannfutter 30 umfasst drei zweite Spannelemente 60, die jeweils einen in einer senkrecht zur Spannachse 68 verlaufenden Ebene verstellbaren, gleitend gelagerten Spannstift 62 aufweisen, wobei zwei der zweiten Spannelemente 60 ortsfest derart auf dem zweiten Spannfutter 30 gelagert sind, dass die Spannstifte 62 radial zur Spannachse 68 ausgerichtet sind und radial gegen das Werkstück 22 verspannt werden können. Hierzu werden die gleitend gelagerten Spannstifte 62 gegen das Werkstück 22 angestellt und mit Hilfe von Klemmschrauben 63 fixiert.

Eines dieser zweiten Spannelemente 60 ist in einer am zweiten Spannfutter 30 in Umfangsrichtung verlaufenden Führungsnut 64 in diese Umfangsrichtung verschiebbar gelagert, um auf diese Weise die Aufnahme eines nicht exakt zylindrisch geformten Werkstückes 22 zu ermöglichen.

Der Fig. 8 ist außerdem zu entnehmen, dass das zweite Spannfutter 30 eine zentrisch zur Spannachse 68 angeordnete zylindrische Hülse 59 aufweist, die als Führung für eine nachfolgend näher erläuterte Hilfsvorrichtung 32 dient.

Gemäß Fig. 9 umfasst die Hilfsvorrichtung 32 einen zylindrischen Dorn 70, an dem schwenkbar mit Hilfe von zwei Schwenkhebeln 72 drei radial verstellbare Klemmbacken 74 angeordnet sind, die ebenfalls eine prismatische Aufnahme bilden, mit denen sie ein ringförmiges, hohlzylindrisches Werkstück 22 an seinem Innenumfang zentrisch aufnehmen. Der Dorn 70 endet in einem zylindrischen Fortsatz 76, dessen Außenumfang an den Innenumfang der am zweiten Spannfutter 30 angeordneten Hülse 54 angepasst ist, so dass der Dorn 70 zentrisch im zweiten Spannfutter 30 platziert werden kann und sichergestellt ist, dass die zweiten Spannelemente 60 das Werkstück in einer Position fixieren, in der es zentrisch zur Spannachse 68 ausgerichtet ist.

**Bezugszeichenliste**

| | | | |
|---|---|---|---|
| 2 | Längsnut | 58 | Ebene |
| 4 | Montageplatte | 59 | Hülse |
| 6 | Träger | 60 | zweites Spannelement |
| 8 | Klemmschraube | 62 | Spannstift |
| 10 | Grundplatte | 63 | Klemmschraube |
| 12 | Halteplatte | 64 | Führungsnut |
| 14 | Schwenkachse | 68 | Spannachse |
| 16 | Drehantrieb | 70 | Dorn |
| 18 | Drehachse | 72 | Schwenkhebel |
| 20 | erstes Spannfutter | 74 | Klemmbacken |
| 22 | Werkstück | 76 | Fortsatz |
| 24 | Halterung | | |
| 26 | Beobachtungskamera | L | Laserstrahl |
| 28 | Vertiefung | B | Beobachtungskegel |
| 29 | Bolzen | F_{i,a} | Kraft |
| 30 | zweites Spannfutter | | |
| 32 | Hilfsvorrichtung | a | Ausgangsposition |
| 40 | erstes Spannelement | b | Mittenposition |
| 42 | Doppelpfeil | c | Endposition |
| 48 | Spannachse | | |
| 49 | Abdeckscheibe | | |
| 50 | Drehring | | |
| 51 | Scheibe | | |
| 52 | Schwenkhebel | | |
| 53 | Ausnehmung | | |
| 54 | Zapfen | | |
| 55 | Arbeitsebene | | |
| 56 | Federanordnung | | |
| 57 | Richtung | | |

## Patentansprüche

1. Vorrichtung zur Aufnahme eines im wesentlichen zylindrischen Werkstückes (22), insbesondere eines Schmuckringes, für die Bearbeitung mit einem Laserstrahl (L), mit zumindest einem drehbar um eine Drehachse (18) gelagerten ersten Spannfutter (20) zur zentrischen Aufnahme des Werkstückes (22) mit, radial zu einer mit der Drehachse (18) zusammenfallenden Spannachse (48) verstellbaren ersten Spannelementen (40), die das Werkstück (22) selbsttätig unter Ausübung einer konstruktiv vorgegebenen und vom Bediener nicht beeinflussbaren Federkraft fixieren.

2. Vorrichtung nach Anspruch 1, bei dem das erste Spannfutter (20) an einer Welle eines an einem Träger (6) angeordneten Drehantriebes (16) gelagert ist.

3. Vorrichtung nach Anspruch 2, bei dem der Drehantrieb (16) um eine senkrecht zur Welle verlaufende Schwenkachse (14) schwenkbar am Träger (6) gelagert ist.

4. Vorrichtung nach Anspruch 3, bei dem der Drehantrieb (16) in verschiedenen Schwenkpositionen zugeordneten Rastpositionen am Träger (6) arretierbar ist.

5. Vorrichtung nach einem der vorhergehenden Ansprüche, bei dem das erste Spannfutter (20) drei radial verstellbare erste Spannelemente (40) umfasst, mit denen das Werkstück (22) unter Ausübung einer nach innen oder nach außen gerichteten radialen Federkraft im Spannfutter (20) fixierbar ist.

6. Vorrichtung nach Anspruch 5, bei dem die ersten Spannelemente (20) als Doppelkegel ausgebildet sind.

7. Vorrichtung nach einem der Ansprüche 2 bis 6, bei dem das erste Spannfutter (20) auswechselbar an der Welle des Drehantriebes (16) fixierbar ist.

8. Vorrichtung nach einem der vorhergehenden Ansprüche, mit einem zweiten Spannfutter (30), das drei zweite Spannelemente (60) umfasst, die jeweils einen in einer senkrecht zur Spannachse (68) verlaufenden Ebene verstellbaren, gleitend gelagerten Spannstift (62) aufweisen, wobei zwei der zweiten Spannelemente (60) ortsfest derart gelagert sind, dass die Achse der Spannstifte (62) radial zur Spannachse (68) ausgerichtet ist, und wobei ein zweites Spannelement (60) in Umfangsrichtung um die Spannachse (68) verschiebbar gelagert ist.

9. Vorrichtung nach Anspruch 8, bei der das zweite Spannfutter (30) eine Führung zum zentrischen Aufsetzen einer Hilfsvorrichtung (32) auf das zweite Spannfutter (30) umfasst, die verstellbare Klemmbacken (74) zum zentrischen Aufnehmen eines hohlzylindrisches Werkstückes (22) an seinem Innenumfang aufweist.

10. Vorrichtung nach einem der Ansprüche 3 bis 10, mit einer am Träger (6) in unterschiedlichen Positionen anbringbaren Beobachtungskamera (26).

## Claims

1. Device for receiving a substantially cylindrical workpiece (22), in particular a decorative ring, for processing with a laser beam (L), having at least one first chuck (20) which is mounted rotatably about an axis of rotation (18) for central receiving of the workpiece (22) having first tensioning elements (40) which are able to be adjusted radially with respect to a tensioning axis (48) coinciding with the axis of rotation (18) and which fix the workpiece (22) independently by exerting a structurally predefined spring force which cannot be influenced by the operator.

2. Device according to claim 1, wherein the first chuck (20) is mounted on a shaft of a rotary drive (16) arranged on a support (6).

3. Device according to claim 2, wherein the rotary drive (16) is mounted on the support (6) to be pivotable about a pivot axis (14) which runs perpendicularly to the shaft.

4. Device according to claim 3, wherein the rotary drive (16) is able to be locked on the support (6) in different locking positions assigned to pivot positions.

5. Device according to one of the preceding claims, wherein the first chuck (20) comprises three radially adjustable first tensioning elements (40), with which the workpiece (22) is able to be fixed in the chuck (20) by exerting a radial spring force which is directed inwards or outwards.

6. Device according to claim 5, wherein the first tensioning elements (20) are formed as double cones.

7. Device according to one of claims 2 to 6, wherein the first chuck (20) is able to be fixed interchangeably to the shaft of the rotary drive (16).

8. Device according to one of the preceding claims, having a second chuck (30) which comprises three second tensioning elements (60) which each have a dowel pin (62) which is mounted slidably and is adjustable in a plane which runs perpendicularly to the tensioning axis (68), wherein two of the second tensioning elements (60) are mounted in a fixed manner in such a way that the axis of the dowel pin (62) is aligned radially to the tensioning axis (68) and wherein a second tensioning element (60) is mounted to be able to be moved about the tensioning axis (68) in the peripheral direction.

9. Device according to claim 8, wherein the second chuck (30) comprises a guide for the central positioning of an auxiliary device (32) on the second chuck (30) which has adjustable clamping jaws (74) for the central receiving of a hollow cylindrical workpiece (22) on its inner circumference.

10. Device according to one of claims 3 to 10, having an observation camera (26) which is able to be installed on the support (6) in different positions.

## Revendications

1. Dispositif de réception d'une pièce (22) sensiblement cylindrique, notamment d'une bague, pour l'usinage par un faisceau (L) laser, comprenant au moins un premier mandrin (20) de serrage monté tournant autour d'un axe (18) de rotation pour la réception centrée de la pièce (22) et ayant de premiers éléments (40) de serrage réglables radialement par rapport à un axe (48) de serrage coïncidant avec l'axe (18) de rotation, éléments (40) qui immobilisent la pièce (22) automatiquement en appliquant une force de ressort donnée à l'avance par construction et ne pouvant pas être influencée par l'opérateur.

2. Dispositif suivant la revendication 1, dans lequel le premier mandrin (20) de serrage est monté sur un arbre d'un entraînement (16) en rotation monté sur un support (6).

3. Dispositif suivant la revendication 2, dans lequel l'entraînement (16) en rotation est monté sur le support (6) pivotant autour d'un axe (14) de pivotement s'étendant perpendiculairement à l'arbre.

4. Dispositif suivant la revendication 3, dans lequel l'entraînement (16) en rotation peut être bloqué sur le support (6) en des positions d'encliquetage associées à des positions de pivotement différentes.

5. Dispositif suivant l'une des revendications précédentes, dans lequel le premier mandrin (20) de serrage comprend trois premiers éléments (40) de serrage réglables radialement, par lesquels la pièce (22) peut être immobilisée dans le mandrin (20) de serrage en appliquant une force de ressort radiale dirigée vers l'intérieur ou vers l'extérieur.

6. Dispositif suivant la revendication 5, dans lequel les premiers éléments (20) de serrage sont constitués sous la forme de double cône.

7. Dispositif suivant l'une des revendications 2 à 6, dans lequel le premier mandrin (20) de serrage peut être immobilisé de manière à pouvoir être remplacé sur l'arbre de l'entraînement (16) en rotation.

8. Dispositif suivant l'une des revendications précédentes, ayant un deuxième mandrin (30) de serrage, qui comprend trois deuxièmes éléments (60) de serrage, qui ont respectivement une goupille (62) de serrage montée glissante et réglable dans un plan s'étendant perpendiculairement à l'axe (62) de serrage, dans lequel deux des deuxièmes éléments (60) de serrage sont montés à poste fixe, de manière à ce que l'axe des goupilles (62) de serrage soit dirigé radialement par rapport à l'axe (68) de serrage, et dans lequel un deuxième élément (60) de serrage est monté mobile dans la direction périphérique autour de l'axe (68) de serrage.

9. Dispositif suivant la revendication 8, dans lequel le deuxième mandrin (30) de serrage comprend un guidage pour la pose centrée d'un dispositif (32) auxiliaire sur le deuxième mandrin (30) de serrage, ayant, sur son pourtour intérieur, des mâchoires (74) de serrage réglables pour la réception centrée d'une pièce (22) cylindrique creuse.

10. Dispositif suivant l'une des revendications 3 à 9, comprenant une caméra (26) d'observation pouvant être mise sur le support (6) en des positions différentes.
